# FASCICULE DE BREVET EUROPEEN

(11) **EP 3 021 523 B1**
(45) Date de publication et mention de la délivrance du brevet: **06.11.2019**
(21) Numéro de dépôt: 15185260.5
(22) Date de dépôt: 15.09.2015
(51) Int. Cl.: H04L 29/08, H04L 12/24, H04L 12/26

(54) **MÉTHODE ET SYSTÈME DE SUPERVISION APPLICATIVE**
VERFAHREN UND SYSTEM ZUR ANWENDUNGSÜBERWACHUNG
METHOD AND SYSTEM FOR APPLICATION SUPERVISION

(30) Priorité: 12.11.2014 FR 1460893
(43) Date de publication de la demande: 18.05.2016
(73) Titulaire: Bull S.A.S., 78340 Les Clayes-sous-Bois (FR)
(72) Inventeur: AIELLO, Damien, 38500 La Buisse (FR); Demeilliez, Bruno, 38330 Montbonnot Saint Martin (FR); GERMAIN, Christophe, 38100 Grenoble (FR)
(74) Mandataire: Novagraaf Technologies

(56) Documents cités:
- WO-A1-2011/144880
- GB-A- 2 399 196
- US-A1- 2005 021 736

## Description

La présente invention se rapporte généralement au domaine technique du monitoring applicatif et de tests de performance, et plus particulièrement à la supervision applicative des services en ligne.

Avec l'utilisation généralisée des technologies informatiques, de plus en plus de services sont proposés d'une manière électronique, dits services en ligne. Il s'ensuit que la complexité des systèmes informatiques croît de jour en jour rendant leurs supervisions manuelles très difficiles, voire impossibles. Un besoin d'automatisation de la supervision de l'infrastructure informatique et des applications en ligne rejoint, ainsi, les préoccupations des administrateurs système.

La supervision (ou monitoring) désigne, ici, un ensemble de mécanismes permettant la surveillance du bon fonctionnement d'un système informatique en production. Elle comprend:
- la supervision système qui porte sur la surveillance des ressources système telles que le processeur, ou l'espace mémoire ;
- la supervision réseau qui porte sur la surveillance de la sécurité des données et de la disponibilité des ressources réseaux (par exemples, la bande passante, le débit, ou la capacité de routage) ; et
- la supervision des applications (ou supervision applicative) qui porte sur la surveillance de la disponibilité d'une application en ligne (aussi dite, une application en mode service ou un service applicatif) en termes de services rendus aux utilisateurs finaux.

S'agissant de la supervision applicative, cette dernière peut avoir pour objectifs
- l'identification des problèmes de fourniture d'un certain service applicatif ;
- la mesure des performances d'une application en ligne (par exemple, en termes de temps de réponse aux demandes d'un service applicatif fourni par cette application) et ceci indépendamment de l'état de l'infrastructure matérielle; ou
- la cartographie des actes métiers réalisés en interaction avec l'application en ligne.

On entend, ici, par « acte métier » une activité ou une transaction de type requête/réponse ayant lieu entre un utilisateur et une application en ligne pour répondre à un besoin métier fourni par cette application. A titre d'exemples non-limitatifs d'actes métier, on cite l'acte d'un achat en ligne, l'acte de remplir et soumettre un formulaire en ligne, l'acte d'authentification, l'acte de télécharger/charger un contenu, ou l'acte de requérir l'accès à un certain contenu tel qu'une page Web. Les termes « application », « application en ligne », de même que « service applicatif » ou « service applicatif en ligne » sont utilisés indifféremment pour désigner une plateforme logicielle configurée pour fournir au moins un service prédéfini (tels que de partage de données, de paiement, de vente, de réservation, d'information, d'inscription, d'authentification, ou de communication).

Des scénarios d'actes métier spécifiques à chaque service fourni par une application sont définis, ensuite testés sur l'application une fois mise en ligne. A titre d'exemple, pour surveiller la disponibilité d'une application Web en termes de service Web (c'est- à-dire, si elle est en mesure de servir des pages Web requises), des scénarios de navigation Web impliquant différents écran de cette application sont simulés depuis un terminal utilisateur. Dans la pratique, cette simulation est, généralement, mise en oeuvre par des outils robot (ou agents virtuels) via l'envoi de requêtes (ou demandes) de service représentatives d'actes métier et par la vérification des réponses obtenues en retour.

Par ailleurs, les actes métiers sont, généralement, différents d'un utilisateur à un autre. La cartographie (ou la classification) de ces actes métiers seraient, donc, d'une utilité considérable pour les tests de performance. US 2005/021736 A1 décrit un procédé et un système permettant de mesurer, au niveau client et ou au niveau serveur, des paramètres correspondants à des transactions.

Cependant, aucune des solutions existantes ne permet de cartographier les actes métiers qui ont eu lieu ou qui sont en cours. Ainsi, ce problème de cartographie des actes métiers se pose régulièrement lors des différentes surveillances applicatives et des campagnes de tests de performance.

Pour réaliser des tests de performance, on est contraint de simuler complètement le comportement des utilisateurs lorsque l'application sera en production. A cet égard, il faut imaginer quels actes métiers les utilisateurs vont faire (type d'acte, volumétrie, et durée par exemples). Néanmoins et quand bien même une application est déjà en production dans une version précédente, les solutions existantes ne disposent pas des informations permettant d'avoir connaissance du comportement réel des utilisateurs à l'effet de baser les simulations sur des mesures factuelles.

En outre, pour mettre en place une supervision d'une application en production, les solutions connues ne disposent d'aucun mécanisme permettant de connaître de façon précise les actes métiers des utilisateurs et ne peuvent, par conséquent, les relier aux observations obtenues via des sondes systèmes ou applicatives déployées. On en est, ainsi, réduit à estimer l'activité des utilisateurs via des approximations basées, par exemple, sur le volume des données réseau échangées en entrée de la plateforme de l'application (ou du/des service(s) applicatif(s) proposé(s)).

Un objet de la présente invention est de proposer des systèmes et méthodes de classification (ou de cartographie) des actes métiers d'un service applicatif en production.

Un autre objet de la présente invention est de connaître, en temps réel ou en temps différé, l'activité des utilisateurs d'un service applicatif.

Un autre objet de la présente invention est de pouvoir identifier d'une manière précise le(s) problème(s) en termes de services rendus d'une application en ligne.

A cette fin, l'invention se rapporte, selon un premier aspect, à un procédé pour la supervision applicative d'un service en ligne fourni par un module applicatif, ledit procédé étant comme celui revendiqué dans la revendication 1.

Ce procédé comprend, selon diverses réalisations, les étapes suivantes, le cas échéant combinées :
- une étape de test de correspondance de la demande de service interceptée à au moins un service en ligne à superviser, ce service étant fourni par ledit module applicatif ;
- une étape de classification de la demande de service marquée sur la base de la valeur enregistrée dudit au moins paramètre prédéfini à tracer ;
- une étape de transmission de ladite demande de service marquée au module applicatif ;
- une étape de redirection de la demande de service ;
- dans l'étape de marquage, une modification de l'entête de la demande de service de sorte à pouvoir tracer et identifier d'une manière unique cette demande de service.

Avantageusement, la demande de service est une requête de type GET, POST, ou HEAD, y compris une requête http de type POST.

L'invention se rapporte, selon un deuxième aspect, à un dispositif de supervision applicative pour la supervision applicative d'un service en ligne fourni par un module applicatif, ce dispositif étant comme celui revendiqué dans la revendication de dispositif 6.

marquée sur la base de la valeur enregistrée dudit au moins paramètre prédéfini à tracer.

L'invention se rapporte, selon un troisième aspect, à un produit programme d'ordinateur comme celui revendiqué dans la revendication 7, ledit produit programme d'ordinateur étant implémenté sur un support mémoire, susceptible d'être mis en oeuvre au sein d'une unité de traitement informatique et comprenant des instructions pour la mise en oeuvre du procédé résumé ci-dessus. Des modes de réalisation préférés se trouvent dans les revendications dépendantes.

D'autres caractéristiques et avantages de l'invention apparaîtront plus clairement et de manière concrète à la lecture de la description ci-après de modes de réalisation préférés, faite ci-après en référence aux dessins annexés dans lesquels :
- la FiG.1 illustre schématiquement une représentation fonctionnelle non limitative d'un mode de réalisation pour la supervision applicative d'un service applicatif en ligne ; et
- la FiG.2 illustre schématiquement des étapes d'un procédé de supervision applicative selon un mode de réalisation.

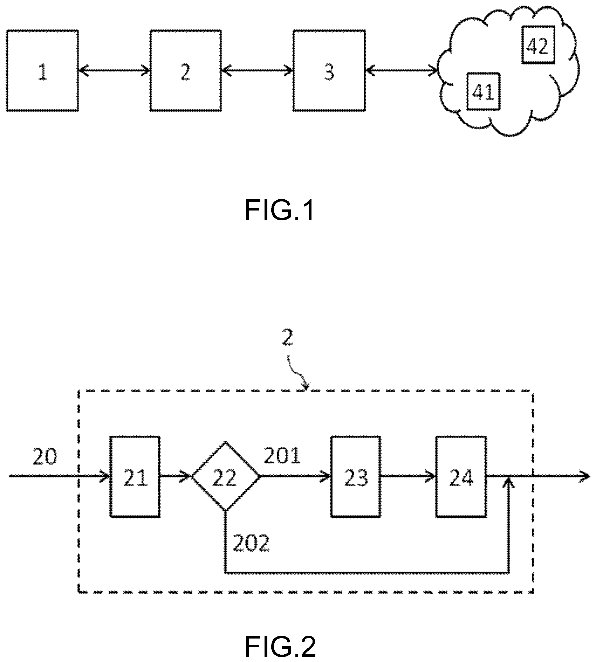

Sur la figure 1 est représenté un terminal utilisateur 1 via lequel, un utilisateur peut adresser, par l'intermédiaire d'un serveur frontal 3, une demande de service applicatif à un ou plusieurs module(s) applicatifs 41, 42 fournissant ce service. Ce terminal utilisateur 1 est, en outre, configuré pour recevoir une réponse à une demande de service applicatif retournée par le(s) module(s) applicatif(s) 41, 42, via le serveur frontal 3. Ces demandes/réponses visent à l'utilisation d'un service applicatif fourni par un ou plusieurs modules applicatifs 41-42. Les modules applicatifs 41-42 incluent, par exemples, un ou plusieurs serveurs d'application 41-42 et/ou un ou plusieurs bases de données 41-42. Le service applicatif peut être, par exemple, un service Web mis à disposition sur demande depuis le terminal utilisateur 1 par des serveurs d'application 41-42. Ce service Web peut comprendre, par exemples, un service de courriel, un service d'agenda, la navigation dans un système d'information, un service d'interrogation de bases de données en ligne, un service d'enseignement à distance, un service de vente et/ou de réservation en ligne, un service de remplissage et de soumission d'un formulaire électronique, un service de téléchargement et/ou le chargement de contenus.

Le terminal utilisateur 1 est un ordinateur, une tablette numérique, un Smartphone, un téléphone portable, ou plus généralement tout dispositif permettant à un utilisateur d'émettre des requêtes et de recevoir des réponses vers/depuis un serveur distant.

Le terminal utilisateur 1 est pourvu d'une application cliente permettant d'envoyer des demandes de service au serveur frontal 3 et d'en interpréter les réponses. Cette application cliente est, par exemple, un navigateur Web (FireFox®, Fennec®, Opera®, Opera Mobile®, Internet Explorer®, Google Chrome® par exemple), un navigateur ftp (tel que FileZilla), ou un client Telnet. Cette application cliente permet d'utiliser le service applicatif fourni par les modules applicatifs 41-42.

Le serveur frontal 3 comprend la couche de présentation au service applicatif fourni par les modules applicatifs 41-42. Ce serveur frontal 3 accepte les demandes (c.à.d. requêtes) de service des terminaux utilisateur 1 adressées aux modules applicatifs 41, 42, achemine ces demandes à ces modules applicatifs 41-42 pour traitement, et retourne les réponses des modules applicatifs 41-42 aux terminaux utilisateur 1. Le serveur frontal 3 permet, ainsi, l'accès à au moins un service applicatif, tel qu'une application Web ou WAP hébergée par un ou plusieurs modules applicatifs 41-42. A titre illustratif, un serveur frontal 3 pour un service applicatif peut être
- un serveur Apache pour utiliser un serveur applicatif Web 41-42; et/ou
- un serveur SQL pour interroger un module applicatif 41-42 de type une base de données.

La communication entre le terminal utilisateur 1 et le serveur frontal 3 est établie selon un protocole de navigation simultanément supporté (http, WAP, ftp, ou Telnet par exemples).

Les demandes de service émises depuis le terminal utilisateur 1 et adressées aux modules applicatifs 41, 42 sont interceptées par un module de supervision applicative 2.

Le module de supervision applicative 2 se charge de surveiller la disponibilité du service applicatif fourni par les modules applicatifs 41-42 par l'intermédiaire du serveur frontal 3 (par exemple, la surveillance de la disponibilité du service Web, autrement dit la surveillance de la capacité de l'application Web à servir des pages web requises).

En effet, l'envoi d'une demande de service depuis le terminal utilisateur 1 au serveur frontal 3, déclenche la supervision applicative, par le module de supervision applicatif 2, du service applicatif fourni par les modules applicatifs 41-42. Pour cela, toute demande de service adressée aux modules applicatifs 41, 42 est interceptée par le module de supervision applicative 2. La demande de service peut être une requête de type GET, POST ou HEAD.

En se référant, maintenant, à la figure 2, dès la réception par le module de supervision applicatif 2 d'une demande de service 20, ce module de supervision applicative 2 marque (c'est-à-dire, étiquète ou «tag» en terminologie anglo-saxonne) cette demande de service de sorte à pouvoir la tracer et l'identifier d'une manière unique (étape 21 sur la figure 2).

Dans un mode de réalisation, pour marquer une demande de service 20, le module de surveillance applicative 2 modifie l'entête de cette demande de service (c'est-à-dire, l'entête de la requête) de sorte à pouvoir tracer et identifier chaque demande de service 20. Le module de surveillance applicative 2 marque l'entête des requêtes http à l'aide d'un identifiant associé au service applicatif requis et/ou au terminal utilisateur, et/ou déduit de paramètre(s) propres à chaque demande de service (source, taille, contenu, timestamp par exemple). Cet identifiant est ajouté à l'entête des requêtes http 20 envoyées depuis le terminal utilisateur 1.

Le module de supervision applicative 2 teste la correspondance (étape 22 sur la figure 2) de la demande de service 20 interceptée à une liste de services en ligne (ou service applicatifs) à superviser (c'est-à-dire, à suivre ou à contrôler). Autrement dit, le module de supervision applicative 2 vérifie si le service applicatif demandé figure parmi une liste de services applicatifs à surveiller.

A titre d'exemple, le module de supervision applicative 2 compare l'adresse (à savoir, l'URL) du service applicatif requis à un modèle d'adresses (un modèle d'URLs) ou à une liste finie d'adresses prédéfinies afin de ne superviser la disponibilité que de certains services (ou écrans/pages) fournis par les modules applicatifs 41, 42. Ceci permet, avantageusement, de ne superviser la disponibilité d'une application en ligne que certains des services applicatifs qu'elle fournit.

Par ailleurs, afin de mieux cibler les paramètres des demandes de service 201 et ainsi éviter de noyer les administrateurs système dans un flot d'informations important, seulement des paramètres prédéfinis des demandes de service 201 sont tracés. Pour cela, les demandes de service 201, qui correspondent à un modèle d'adresses prédéfini ou qui sont comprises dans une liste d'adresses prédéfinie, sont filtrées (étapes 23 de la figure 2) par le module de supervision applicative 2 en fonction d'une configuration prédéfinie spécifiant les paramètres à tracer des demandes de service 201 sous surveillance. Autrement dit, les demandes de service 201 qui sont à suivre (c.à.d. celles qui sont validés par le test 22) sont filtrées pour y déterminer (étape 23 de la figure 2) les valeurs respectives des paramètres prédéfinis à tracer. Ces paramètres peuvent comprendre tout paramètre descriptif d'une demande de service 201 dans le cadre d'un acte métier. Le service applicatif requis, le nombre et/ou la taille moyenne de photos postées lors d'un acte métier, la date et/ou l'heure (timestamps) d'une demande de service, et/ou la nature du terminal utilisateur 1 source de la demande de service (un terminal mobile ou fixe par exemple) sont des exemples non-exhaustifs de paramètres à tracer, par le module de supervision applicative 2, des demandes de service 201.

La détermination des paramètres temporels des actes métiers peut être effectuée au moyen d'une variable alimentée avec l'heure courante ou en utilisant comme référence l'heure de la première demande de service 201 depuis un terminal utilisateur 1 lors d'une session. Les valeurs de ce paramètre permettent de calculer le temps (en millisecondes) écoulé entre deux actes métier consécutives et/ou la durée d'un acte métier (également en millisecondes).

Les données enregistrées portent sur des paramètres descriptifs des demandes de service 201, et donc des actes métiers, effectués par l'utilisateur et non sur le contenu lui-même de ses actes métiers. A titre d'exemple, dans le cas d'une requête de type POST
- pour envoyer trois photos, c'est la valeur trois du paramètre « nombre de photos postées» qui est déterminée ensuite enregistré et non pas le contenu des photos, ou
- pour soumettre un formulaire électronique, c'est, par exemple, le nombre de champs non-rempli et/ou incorrectement rempli, qui est déterminé ensuite enregistré et non pas le contenu des champs du formulaire.

Une copie des valeurs déterminées des paramètres à tracer dans les demandes de service 201 est enregistrée (étape 24 de la figure 2) par le module de supervision applicative 2. Des éventuelles valeurs à déterminer des paramètres à tracer, qui sont masquées dans les demandes de service 201 sont, également, enregistrées (étape 24 de la figure 2) par le module de supervision applicative 2. La demande de service 201 est, ensuite, transmise au serveur frontal 3.

Quant aux demandes de service 202 qui ne sont pas retenues suite au test de correspondance 22 (c.à.d. celles qui ne correspondent ni à un modèle d'adresses prédéfini, ni compris dans une liste d'adresses prédéfinies) sont envoyées sur la sortie du module de supervision applicative 2 pour être transférées au serveur frontal 3.

Les réponses aux demandes de service 201 et/ou 202 sont fournies par les modules applicatifs 41-42 et adressées au terminal utilisateur 1. Dans un mode de réalisation, le module de surveillance applicative 2 modifie, en temps réel, les règles de redirection des requêtes de service émises depuis le terminal utilisateur 1. Cette étape de redirection d'une demande de service 201 interceptée par le module de supervision applicative 2 est avantageuse lorsque le module applicatif 41-42, auquel la demande de service 201 interceptée est initialement adressée, est indisponible. Ceci permet d'assurer la continuité du service applicatif et évite d'envoyer des messages d'erreurs en réponse aux demandes de service des utilisateurs.

Dans un autre mode de réalisation, les valeurs déterminées des paramètres à tracer dans les demandes de service 201 sont enregistrées dans une trace de demandes de service (ou d'actes métiers). Plusieurs traces de demandes de service 201 peuvent être envisagées, par exemples, par terminal utilisateur 1, par technologie d'accès, par intervalle de temps, et/ou par zones géographiques des terminaux utilisateur sources des demandes de service 201.

Pour cela, dans un mode de réalisation, l'identifiant marquant la demande de service 201 (cet identifiant étant ajouté lors de l'étape 21 dans les entêtes des demandes de service) est enregistré, dans la trace de demandes de service avec les valeurs déterminées des paramètres à tracer dans demandes de services 201. Ceci permet, avantageusement, de pouvoir suivre l'activité d'un utilisateur sur le terminal utilisateur 1 de façon anonyme. Dans un autre mode de réalisation, l'identifiant enregistré dans la trace de demandes de service est associé au terminal utilisateur 1 et/ou à une même session dans l'application en ligne de sorte à pouvoir suivre les activités de chaque utilisateur d'une manière anonyme. Grâce à cet identifiant pour l'identification des traces de demandes de service, il est possible d'avoir un suivi des actes métiers et du comportement des utilisateurs lorsqu'ils les exécutent (fréquence, temps d'attente entre chaque étape de l'acte par exemple).

Dans un mode de réalisation, les traces de demandes de service (ou des actes métiers) sont délimitées avec les balises « <trace> » et « </trace> », et formatées pour comprendre un entête et une structure. L'entête, délimité par une balise de type <entete> et </entete> comprend un identifiant de cette trace de demandes de service. La structure, délimitée par < structure> » et < /structure >, comprend les paramètres à tracer et leurs valeurs respectives. Une trace des actes métiers peut, en outre, être enrichie par des informations comprises dans les demandes de service 201, telles qu'un identifiant de l'utilisateur, la date, le numéro et/ou la durée de la session, un identifiant de l'application cliente, le nom de domaine du service applicatif proposé par les modules applicatifs 41-42.

Dans un mode de réalisation, une trace de demandes de service est formatée de sorte à rassembler l'ensemble des actions métiers survenues lors d'une session dans l'application en ligne supporté par les modules applicatifs 41-42.

Pour des raisons de confidentialité, une trace de demandes de service est, dans un mode de réalisation, cryptée selon une méthode de cryptage prédéfinie.

Avantageusement, le module de supervision applicatif 2 est de type reverse-proxy. Ce module de supervision applicatif 2 permet, en effet, de tracer l'ensemble des paramètres des requêtes de service 201 envoyées depuis le terminal utilisateur 1. Il en résulte que le module de supervision applicatif 2 est, avantageusement, capable de tracer non seulement les paramètres des requêtes de type GET, mais aussi ceux des requêtes de type POST.

Plus généralement, la méthode de supervision applicative, mise en oeuvre par le module de supervision applicative 2, intègre un mécanisme de reverse-proxy qui se positionne en amont de la chaîne applicative (c.à.d. les modules applicatives 41-42).

L'analyse d'une trace de demandes de service (ou, plus généralement, d'actes métiers), générées par le module de supervision applicative 2, est prise en charge par un outil d'analyse de données. Cet outil d'analyse d'une trace de demandes de service est configuré pour
- analyser, au moins partiellement, les valeurs déterminées des paramètres à tracer dans les demandes de service 201 (par exemple, vérifier la cohérence des valeurs enregistrées, vérifier la structure de la trace des demandes de service 201);
- classifier ou cartographier les demandes de service 201, par exemple suite à une corrélation et synthèse de ces traces, sur la base des valeurs enregistrées des paramètres à tracer des demandes de service 201 ;
- mettre à disposition les résultats obtenus, y compris l'ensemble des rapports et/ou graphique, via une interface Web ou dans une base de données.

L'outil d'analyse des traces d'actes métiers permet, ainsi, de présenter les valeurs enregistrées des paramètres à tracer des demandes de service, valorisées sous forme de graphique et/ou de rapport. Cette classification, sur la base des valeurs enregistrées des paramètres tracés des demandes de service permet de classer/cartographier les demandes de service selon différent critères et/ou paramètres tels que le type de service requis, la volumétrie du service requis, la durée pour satisfaire une certaine demande de service, le nombre des demandes de service dans le temps, les demandes de service par technologie d'accès, les demandes de service par zone géographique, ou la dynamique d'utilisation du service applicatif.

L'analyse des traces des demandes de service permet, aussi, d'évaluer la dynamique d'utilisation du service applicatif proposé par les modules applicatifs 41-42. Cette étape permet, en particulier, d'identifier la manière dont le service applicatif est utilisé (facilement accessible, intuitif, clair, organisé). Cette étape d'analyse permet, en outre, d'identifier à partir des traces des demandes de service les causes d'abandon d'un service applicatif entamé (l'abandon de panier d'achat en ligne, ou l'annulation d'un processus de téléchargement/chargement de données par exemple). Bien entendu, en fonction des résultats obtenus de l'analyse des traces d'actes métiers, une ou plusieurs décisions peuvent être prises pour amender le service applicatif fourni. Le module de supervision applicative 2 est, notamment, configuré pour recevoir en entrée des instructions suite à l'analyse de la trace des actes métiers. Ces instructions peuvent comprendre, par exemple, la modification (ajout et/ou suppression) des modèles d'URLs auxquels les correspondances sont testées, la modification (ajout et/ou suppression) des paramètres à tracer, l'enregistrement ou non du Post d'une certaine requête.

Par ailleurs, il est possible de centraliser toutes les traces des demandes de service enregistrés au niveau de différents modules de supervision applicative 2 d'un service applicatif fourni par les modules applicatifs 41-42. En effet, une pluralité de modules de supervision applicative 2 peuvent être déployés dans différents zones géographique à partir desquelles le service applicatif est accessible. Ceci a pour effet une meilleure maitrise de la disponibilité du service applicatif destiné à des utilisateurs à différents endroits du monde.

L'outil d'analyse des traces de demande de services permet de faire des analyses sur des périodes antérieures au déploiement du module de supervision applicative 2 de type reverse-proxy. Il permet d'analyser les traces des demandes de service produits par l'application afin d'avoir une vision de l'ensemble des actes métiers.

Il s'ensuit qu'un mécanisme de catégorisation des actes métiers, au moyen par exemple d'un fichier de configuration, permet de faire le lien entre des actes métiers prédéfinis et les requêtes précédemment tracées.

Les modes de réalisation décrits ci-dessus présentent, ainsi, un mécanisme permettant de classifier les actes métiers dans une application en ligne. Avantageusement, la cartographie (ou la classification) des actes métiers compris dans la trace des demandes de service permet de reconstituer dans le temps la manière dont le service applicatif a été rendu aux utilisateurs (en tenant, notamment, compte de l'aspect temporel tel que la durée et/ou l'ordre des actes métiers). Avantageusement, les données relatives à la classification/cartographie des actes métiers (c.à.d. les activités des utilisateurs) peuvent être utilisées à des fins d'analyse de production, ou pour créer/affiner des scénarios de tests de performance. Ces données de classification peuvent être aussi utilisées pour amender l'architecture de l'application en ligne à l'effet d'en améliorer la disponibilité, sans pour autant qu'il soit nécessaire de modifier les terminaux clients ou l'infrastructure matériel sur laquelle est hébergée cette application.

Dans un mode de réalisation, le module de supervision applicatif 2 est une application logicielle, ou plus généralement un produit programme d'ordinateur, comprenant des instructions pour la mise en oeuvre des procédés de supervision applicative présentés ci-dessus et étant implémenté(e) au sein d'un serveur physique dit « serveur de supervision applicative 2». En variante, il est possible d'installer le module de supervision applicative 2 sur le terminal utilisateur 1 ou sur un nœud d'entrée/sortie du réseau informatique (par exemple, un serveur DNS) depuis lequel le terminal utilisateur 1 est connecté au serveur frontal 3.

Les procédés et systèmes de supervision applicative, décrits ci-dessus, sont dits temps réel dans le sens où la surveillance applicative est adaptée à l'évolution du service applicatif contrôlé. L'aspect temps réel consiste, ici, à suivre de manière régulière l'ensemble de la disponibilité des modules applicatifs 41-42 surveillé. Autrement dit, les informations d'indisponibilité et/ou de disponibilité de ces modules applicatifs sont mesurées d'une manière automatique et avec un délai aussi court que possible. Par conséquent, la supervision applicative selon les modes de réalisations décrits ci-dessus permet d'avoir une visibilité en temps réel de la disponibilité d'un service applicatif. Des alarmes ou des actions automatiques prédéfinies peuvent, donc, être déclenchées dès l'occurrence d'un problème dans la fourniture d'un certain service applicatif.

Dans un mode de réalisation, les procédés et systèmes, décrits ci-dessus, de supervision applicative sont déployées à chaque mise en production de modules applicatifs 41-42 pour tester la disponibilité du service fourni et éviter des éventuelles anomalies ultérieures. Les traces d'actes métiers enregistrées sont utilisées à des fins d'anticipation de la disponibilité du ou des services fourni(s) et de prévision de l'évolution de l'application en ligne.

Il est à noter que les méthodes de supervision applicative mises en oeuvre par le module de supervision applicative 2 sont suffisamment souples pour prendre en compte la diversité des terminaux utilisateurs 1, des paramètres à tracer, et des services applicatifs fournis par les modules applicatifs 41-42 (serveur web, serveur ftp, base de données ou autres). Avantageusement, son implémentation est totalement transparente pour les utilisateurs, et ne requière aucune modification de configuration à faire sur l'environnement à cartographier.

## Revendications

1. Procédé pour la supervision applicative d'un service en ligne fourni par un module applicatif (41,42), ce procédé étant exécuté par un module de supervision applicative et comprenant les étapes suivantes:
- interception d'une demande de service (20) adressée, depuis un terminal utilisateur (1), audit module applicatif (41, 42);
- marquage (21) de la demande de service (20) interceptée à l'aide d'un identifiant associé au service applicatif requis et/ou au terminal utilisateur et/ou déduit de paramètres propres à la demande de service, l'étape de marquage comprenant une modification de l'entête de la demande de service, de sorte à pouvoir tracer et identifier d'une manière unique cette demande de service;
- détermination (23) de la valeur d'au moins un paramètre prédéfini à tracer de la demande de service (201) marquée;
- enregistrement (24) de la valeur déterminée dans une trace de demande de service, avec l'identifiant marquant la demande de service et ayant été ajouté lors de l'étape de marquage dans les entêtes des demandes de service;
le procédé comprenant en outre une étape d'analyse d'une trace de demandes de service configuré pour classifier la demande.de service (201) marquée sur la base de la valeur enregistrée dudit au moins paramètre prédéfini à tracer.

2. Le procédé de la revendication 1, comprenant en outre une étape de test de correspondance (21) de la demande de service interceptée à au moins un service en ligne à superviser, ce service étant fourni par ledit module applicatif (41,42).

3. Le procédé de l'une quelconque des revendications précédentes, comprenant en outre une étape de transmission de ladite demande de service (201) marquée au module applicatif (41, 42).

4. Le procédé de l'une quelconque des revendications 1 ou 2, comprenant en outre une étape de redirection de la demande de service.

5. Le procédé de l'une quelconque des revendications précédentes, dans lequel la demande de service est une requête de type GET, POST, ou HEAD.

6. Dispositif de supervision applicative (2) pour la supervision applicative d'un service en ligne fourni par un module applicatif (41-42), ce dispositif étant configuré pour :
- intercepter une demande de service (20) adressée, depuis un terminal utilisateur (1), audit module applicatif (41, 42);
- marquer (21) la demande de service (20) interceptée, à l'aide d'un identifiant associé au service applicatif requis et/ou au terminal utilisateur et/ou déduit de paramètres propres à la demande de service, l'étape de marquage comprenant une modification de l'entête de la demande de service de sorte à pouvoir tracer et identifier d'une manière unique cette demande de service;
- déterminer (23) la valeur d'au moins un paramètre prédéfini à tracer de la demande de service (201) marquée;
- enregistrer (24) la valeur déterminée dans une trace de demande de service, avec l'identifiant marquant la demande de service et ayant été ajouté lors de l'étape de marquage dans les entêtes des demandes de service;
le dispositif comprenant en outre un outil d'analyse d'une trace de demandes de service configuré pour classifier la demande de service (201) marquée sur la base de la valeur enregistrée dudit au moins paramètre prédéfini à tracer.

7. Produit programme d'ordinateur implémenté sur un support mémoire, susceptible d'être mis en oeuvre au sein d'une unité de traitement informatique et comprenant des instructions pour la mise en œuvre, lorsqu'elles sont exécutées par ladite unité de traitement informatique, d'un procédé selon l'une des revendications 1 à 5.

## Patentansprüche

1. Verfahren für die Anwendungsüberwachung eines Online-Services, der von einem Anwendungsmodul (41, 42) bereitgestellt wird, wobei dieses Verfahren von einem Anwendungsüberwachungsmodul durchgeführt wird und die folgenden Schritte umfasst:
- Abfangen einer von einem Benutzerendgerät (1) an das Anwendungsmodul (41, 42) geschickten Serviceanforderung (20);
- Markieren (21) der abgefangenen Serviceanforderung (20) mit Hilfe eines Kennworts, das dem geforderten Anwendungsservice und/oder dem Benutzerendgerät zugeordnet ist und/oder von Parametern abgeleitet ist, die für die Serviceanforderung spezifisch sind, wobei der Markierungsschrift eine Änderung des Kopfs der Serviceanforderung derart umfasst, um diese Serviceanforderung eindeutig tracen und identifizieren zu können;
- Bestimmen (23) des Wertes von mindestens einem zu tracenden, vorher festgelegten Parameter der markierten Serviceanforderung (201);
- Speichern (24) des festgelegten Wertes in einer Serviceanforderungstrace mit dem Kennwort, das die Serviceanforderung markiert und bei dem Schritt der Markierung in die Köpfe der Serviceanforderungen hinzugefügt wurde;
wobei das Verfahren ferner einen Analyseschritt einer Trace von Serviceanforderungen umfasst, die konfiguriert ist, um die markierte Serviceanforderung (201) auf der Basis des gespeicherten Wertes des mindestens einen vorher festgelegten, zu tracenden Parameters zu klassifizieren.

2. Verfahren nach Anspruch 1, umfassend ferner einen Schritt des Tests der Übereinstimmung (21) der abgefangenen Serviceanforderung mit mindestens einem zu überwachenden Online-Service, wobei dieser Service von dem Anwendungsmodul (41, 42) bereitgestellt wird.

3. Verfahren nach einem der vorangehenden Ansprüche, umfassend ferner einen Übertragungsschritt der markierten Serviceanforderung (201) an das Anwendungsmodul (41, 42).

4. Verfahren nach einem der Ansprüche 1 oder 2, umfassend ferner einen Umleitungsschritt der Serviceanforderung.

5. Verfahren nach einem der vorangehenden Ansprüche, wobei die Serviceanforderung eine Anforderung vom Typ GET, POST oder HEAD ist.

6. Vorrichtung zur Anwendungsüberwachung (2) für die Anwendungsüberwachung eines Online-Services, der von einem Anwendungsmodul (41-42) bereitgestellt wird, wobei diese Vorrichtung konfiguriert ist, um:
- eine von einem Benutzerendgerät (1) an das Anwendungsmodul (41, 42) geschickte Serviceanforderung (20) abzufangen;
- die abgefangene Serviceanforderung (20) mit Hilfe eines Kennworts, das dem geforderten Anwendungsservice und/oder dem Benutzerendgerät zugeordnet ist und/oder von Parametern abgeleitet ist, die für die Serviceanforderung spezifisch sind, zu markieren (21), wobei der Markierungsschrift eine Änderung des Kopfs der Serviceanforderung derart umfasst, um diese Serviceanforderung eindeutig tracen und identifizieren zu können;
- den Wert von mindestens einem zu tracenden, vorher festgelegten Parameter der markierten Serviceanforderung (201) zu bestimmen (23);
- den festgelegten Wert in einer Serviceanforderungstrace mit dem Kennwort, das die Serviceanforderung markiert und beim Schritt der Markierung in die Köpfe der Serviceanforderungen hinzugefügt wurde, zu speichern (24);
wobei die Vorrichtung ferner ein Analysewerkzeug einer Trace von Serviceanforderungen umfasst, das konfiguriert ist, um die Serviceanforderung (201) zu klassifizieren, die auf der Basis des gespeicherten Wertes des mindestens einen vorher festgelegten, zu tracenden Parameters markiert wurde.

7. Rechnerprogrammprodukt, implementiert auf einem Speichersupport, umsetzbar innerhalb einer Datenverarbeitungseinheit und Befehle für die Umsetzung umfassend, wenn sie von der Datenverarbeitungseinheit ausgeführt werden, eines Verfahrens nach einem der Ansprüche 1 bis 5.

## Claims

1. Method for application supervision of an online service provided by an application module (41, 42), with this method being executed by an application supervision module and comprising the following steps:
- intercepting a service request (20) sent, from a user terminal (1), audit application module (41, 42);
- marking (21) the intercepted service request (20) using an identifier associated with the required application service and/or with the user terminal and/or deducing parameters proper to the service request, with the step of marking comprising a modification in the header of the service request, in such a way as to be able to track and identify this service request in a unique manner;
- determining (23) the value of at least one predefined parameter to track of the marked service request (201) ;
- recording (24) the determined value in a service request track, with the identifier marking the service request and having been added during the step of marking in the headers of the service requests;
with the method further comprising a step of analysing a service request track configured to classify the marked service request (201) based on the recorded value of said at least one predefined parameter to be tracked.

2. Method of claim 1, further comprising a step of testing the correspondence (21) of the intercepted service request with at least one online service to be supervised, with this service being provided by said application module (41, 42).

3. Method of any of the preceding claims, further comprising a step of transmitting said marked service request (201) to the application module (41, 42).

4. Method of any of claims 1 or 2, further comprising a step of redirecting the service request.

5. Method of any of the preceding claims, wherein the service request is a request of the GET, POST, or HEAD type.

6. Device for application supervision (2) for the application supervision of an online service provided by an application module (41-42), with this device being configured to:
- intercept a service request (20) sent, from a user terminal (1), to said application module (41, 42);
- mark (21) the intercepted service request (20), using an identified associated with the required application service and/or with the user terminal and/or deduce the parameters proper to the service request, with the step of marking comprising a modification in the header of the service request in such a way as to be able to track and identify this service request in a unique manner;
- determine (23) the value of at least one predefined parameter to be tracked of the marked service request (201);
- record (24) the determined value in a service request track, with the identifier marking the service request and having been added during the step of marking in the headers of the service requests;
with the device further comprising a tool for analysing a service demand track configured to classify the marked service request (201) based on the recorded value of said at least one predefined parameter to be tracked.

7. Computer program product implemented on a memory support, able to be implemented within a computer processing unit and comprising instructions for the implementing, when they are executed by said computer processing unit, of a method according to one of claims 1 to 5.
